# EUROPEAN PATENT SPECIFICATION

(11) **EP 1 900 567 B1**
(45) Date of publication and mention of the grant of the patent: **29.02.2012**
(21) Application number: 06019332.3
(22) Date of filing: 15.09.2006
(51) Int. Cl.: B60N 2/28

(54) **Child car seat with easy attachment to fixing systems integrated into the vehicle seat**
Auto-Kindersitz mit einfacher Befestigung an fahrzeugsitzintegrierten Befestigunseinrichtungen
Siège auto pour enfant avec attachement facile sur un siège automobile avec son système de fixation intégré

(43) Date of publication of application: 19.03.2008
(73) Proprietor: ARTSANA S.p.A., 22070 Grandate (Como) (IT)
(72) Inventor: Damiani, Osvaldo, 24035 Curno (Bergamo) (IT); Merli, Gianluca, 21046 Malnate (Varese) (IT)
(74) Representative: Ripamonti, Enrico

(56) References cited:
- EP-A1- 0 970 842
- EP-A2- 0 952 032

## Description

The present invention relates to a child car seat in accordance with the introduction to the main claim.

Currently produced cars are known to present connection or fixing elements for a child car seat which are integrated into the vehicle rear seat. These connection or fixing elements pertain to a known child seat fixing system with the commercial name of ISOFIX; these fixed elements are usually separate and spaced apart, shaped to engage corresponding connection parts associated with an end part of the child seat base supporting a part for containing a child.

With this ISOFIX fixing system, the child seat is hence simply positioned on the sitting portion of the vehicle seat and its coupling members engaged with the fixing element of this system; this engagement is achieved by pressure exerted on said members by the fixing elements against which these members are pushed. However, this system preferably requires the child seat base to be constructed such that the child-containing portion on the base is movable, this portion being pushed against the back rest of the vehicle seat only after the fixing elements have been engaged with the coupling members.

For this reason, those child seats intended to cooperate with the ISOFIX systems comprise a base presenting two portions for resting on the sitting portion of the vehicle seat and movable relative to each other, preferably telescopically. A first telescopic portion presents said coupling members at a free end thereof, the portion for containing the child being directly associated with the second telescopic portion. As stated, this second portion is movable telescopically on the first to enable the coupling members of this latter to be easily engaged with the fixing elements of the ISOFIX system when the second portion is in a first working position in which the base is telescopically elongated, this mobility between the first and second portion enabling the child-containing portion to be correctly positioned against the back rest of the vehicle seat after said engagement. This is achieved because the second telescopic portion slides relative to the first to compact the base.

The movement of the two telescopic portions is usually obtained by means which have to be operated both to extend or elongate the base and to compact it. These means, for example a worm with which a carriage or lead nut associated with the base of the child seat is associated, are often difficult or at least uncomfortable to operate. Moreover, these means are formed in a manner which makes it difficult to fix them to the base of the child seat.

It can also happen that the coupling members, generally two in number, do not both completely engage the corresponding fixing elements with the result that the child seat is not perfectly fixed to the vehicle seat. In this case it is still possible for the two portions of the child seat base to undergo telescopic movement, this movement confusing the user, who may wrongly consider that the child seat has been correctly fixed to the vehicle seat. This can result in considerable risk to the child positioned on the seat.

EP970842 (which the preamble of the main claim refers to) describes a child seat suitable to be located on a vehicle seat. Anchoring means are provided with the vehicle seat and are suitable to cooperate with mounting means of the child seat. The mounting means comprise a chassis having a bottom sheet on which a slidable carrier is located. The latter supports the child seat portion suitable to contain a body.

To the carrier or to a plastic shell of said body supporting portion of the child seat, a handle is pivotally mounted. A handle projection is suitable to engage a saw-toothed rail connected to the bottom sheet of the chassis; with this engagement the slidable carrier is kept at a desired position on the chassis against the bias of springs connected to the above cited bottom sheet.

In another embodiment of this prior document, a handle connected to the slidable carrier is provided, said handle being suitable to pivot about the angular brackets and connected to a lock tooth (by means of a rope) suitable to engage a saw-toothed rail mounted on the slidable carrier metal sheet.

EP952032 describes a child seat having a body mounted on a cover secured to a base plate 40 which has releasable connectors for engagement with fixed anchorage units of a vehicle seat. The connectors are mounted on movable side members of a coupling frame located on the base plate; a pawl, having a ratchet detent is mounted on a pivot pin extending between the side limbs of a bracket secured to a cross member of the coupling frame. A spring biases the detent into engagement with one of a series of slots obtained in the base plate.

A manually actuable handle is accommodated in a recess in the base plate so as to be accessible from below. By acting on the handle, the coupling frame can slide on the base plate and the releasable connectors can be moved in respect of said base.

There is therefore a need to ensure that the child seat is effectively fixed to the fixing elements of the ISOFIX system when a child is placed on it.

An object of the present invention is to provide a child car seat of the type cooperating with fixing elements integrated into a vehicle seat, which represents an improvement over known child seats.

A particular object of the invention is to provide a child seat of the stated type which can be easily positioned on the vehicle seat, be quickly and reliably engaged with the fixing elements associated with this latter, and be easily and quickly separated from said elements.

These and further objects which will be apparent to the expert of the art are attained by a child seat in accordance with the accompanying claims.

The present invention will be more apparent from the accompanying drawings, which are provided by way of non-limiting example and in which:

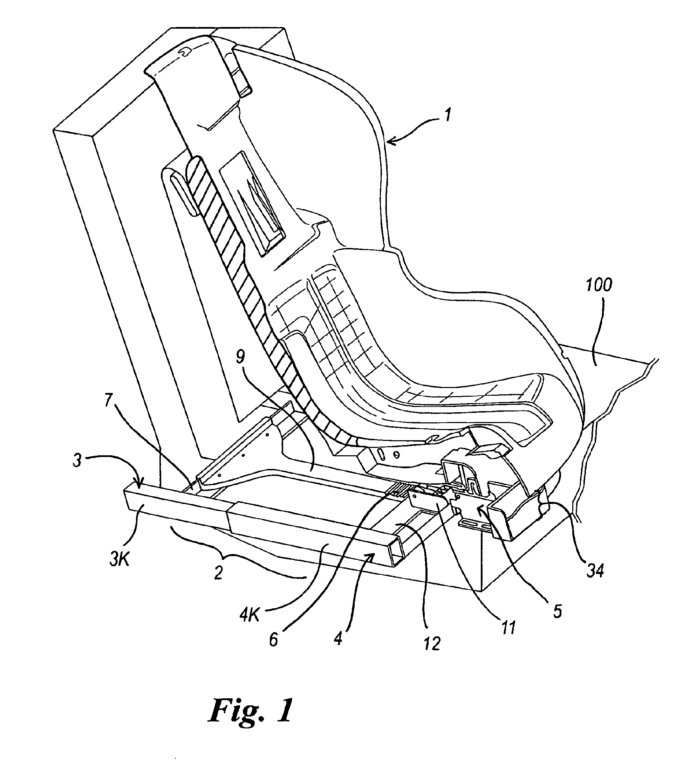

Figure 1 is a schematic view of a child seat according to the invention with some parts omitted for greater clarity;

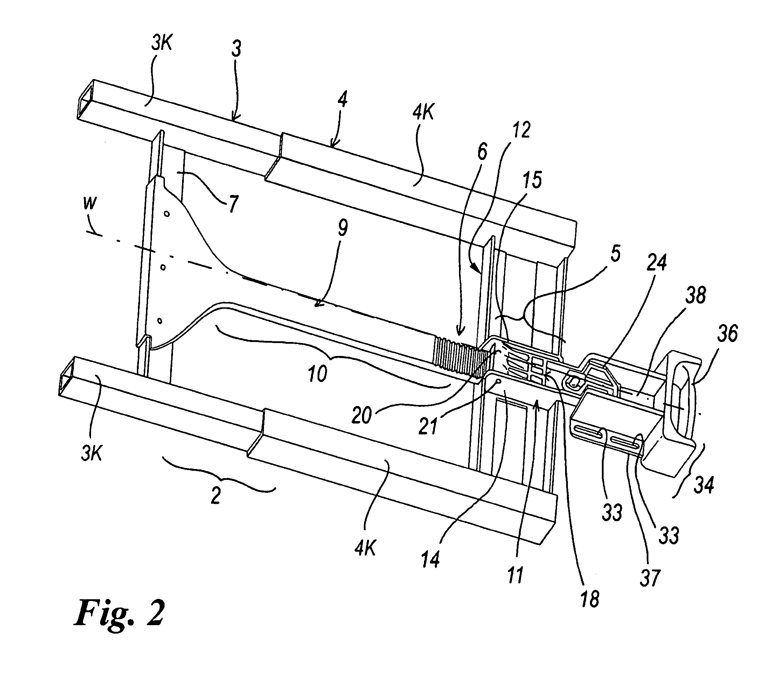

Figure 2 is a perspective view of the base of the child seat of Figure 1;

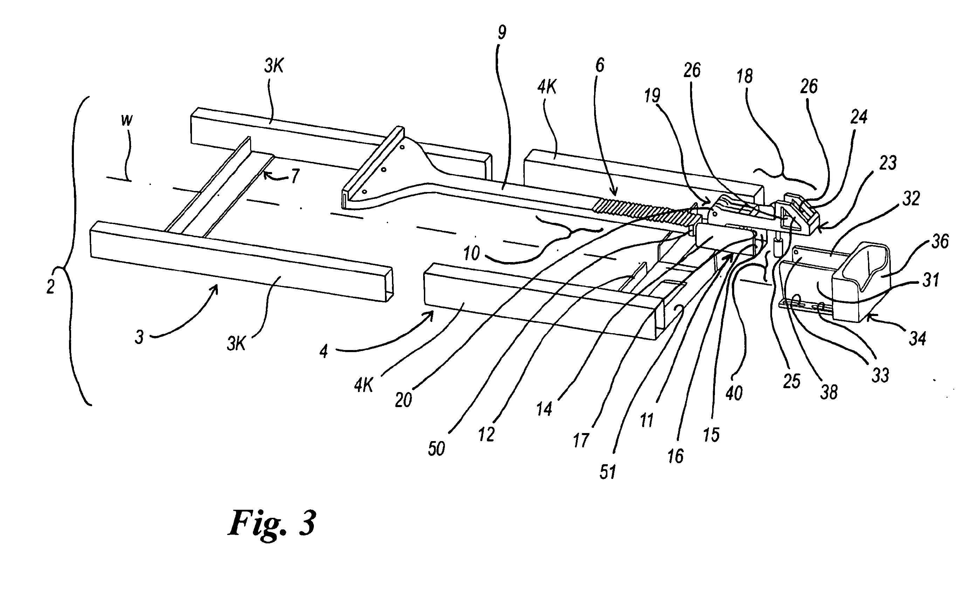

Figure 3 is an exploded perspective view of the base of Figure 2;
Figures 4 to 6 show three stages in fitting the child seat to the fixing elements associated with the vehicle seat and in adjusting said child seat while on the vehicle seat;

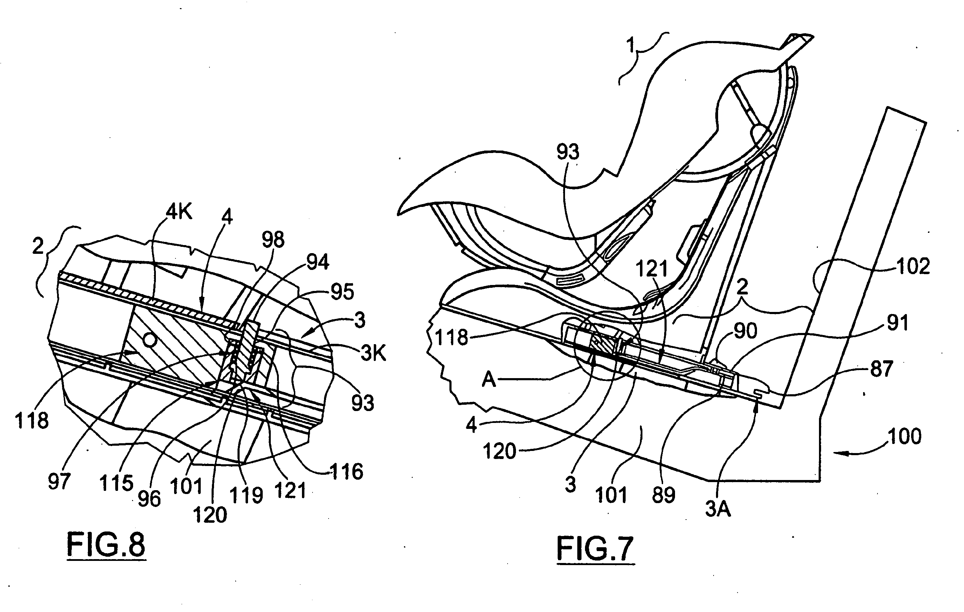

Figure 7 is a side view of the child seat of Figure 1 during its use on a vehicle seat;
Figure 8 is an enlarged view of the part indicated by A in Figure 7;
Figure 9 is an enlarged view, with some parts removed for greater clarity, of a portion of the child seat of the invention in a first utilization stage; and
Figure 10 is a view similar to Figure 9, but with the portion shown therein in a second different utilization stage.

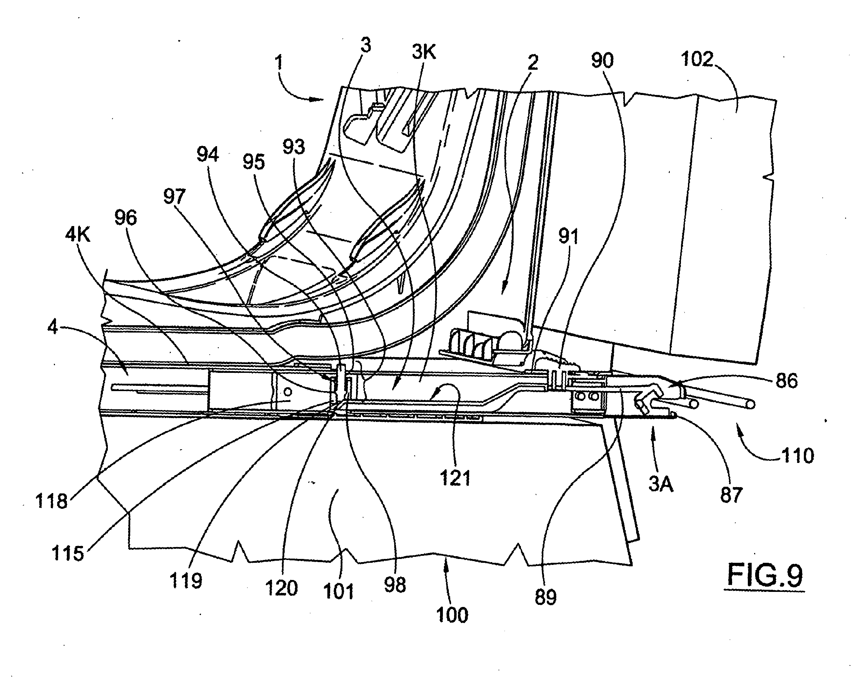

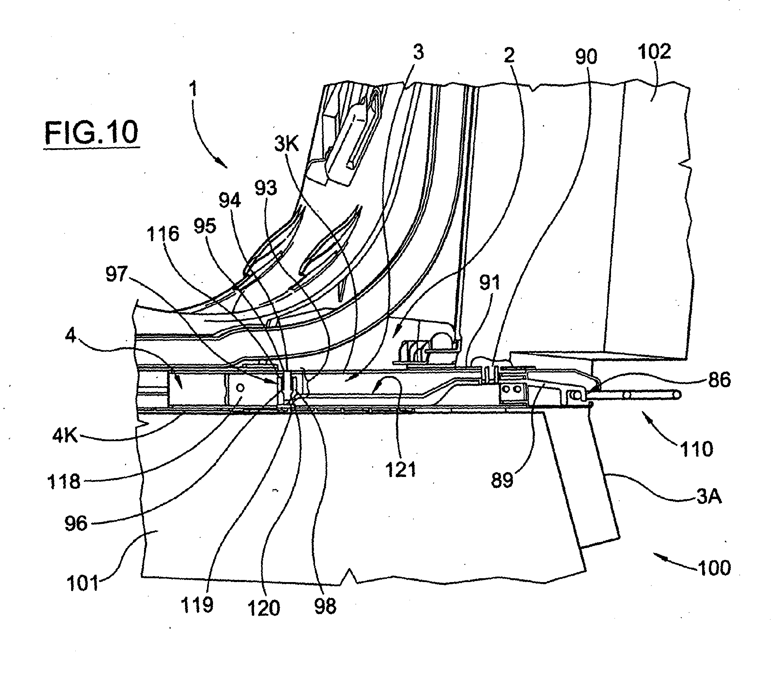

With reference to said figures, a child car seat comprises a portion 1 to support and contain a child. The portion 1 is rigid with a base 2 intended to rest on a vehicle seat 100 of the type provided with connection or fixing elements 110 (see Figures 9 and 10) defining the known ISOFIX retention system. The vehicle seat comprises a sitting portion 101 and a back rest 102.

The child seat base 2 comprises two portions 3, 4 telescopically movable relative to each other: the first portion 3 is arranged to cooperate, as described hereinafter, with the fixing elements 110 of the vehicle seat 100, while the second portion 4 substantially supports the portion 1 in which the child is to be positioned.

The second portion 4 of the base 2 is rigid with a member 5 selectively movable along a rack 6 fixed to a transverse part 7 of the first portion 3 of the base 2. This rack 6 is preferably partially formed along a rectilinear portion 9 of a bar 10 associated with said part 7 (in any known manner) and disposed along the central axis W of the base 2.

The member 5 comprises a support 11 formed directly by stamping and bending and fixed to a transverse element 12 of the second portion 4 of the base 2. This support is substantially of U cross-section and comprises parallel flanges 14, 15 joined together by a base 16. A compartment 17 present between the flanges 14, 15 contains a lever 18 presenting a part 19 with a first end 20 hinged by a pin 21 to the flanges 14 and 15 of said support 11.

At its second end 23, the part 19 of the lever 18 presents lateral flanges 24, 25 comprising a hole 26 bounded by at least one inclined or arcuate side 28. Through this hole a pin 30 is positioned supported by flanges 31, 32 of an operating handle 34 which controls the position of the member 5 on the rack 6, to connect this member to the latter or to mutually release them. The handle 34 presents a gripping portion 36 from which the flanges 31, 32 extend mutually parallel to define a recess 38 in which the end 23 of the lever 18 is positioned. The handle 34 is limitedly movable along the axis W guided by pins (not shown) associated with the portion 1 or by suitable ribs formed on the child-containing portion 1 and relatively movable within slots 33 provided in flanges 37 projecting from the flanges 31, 32.

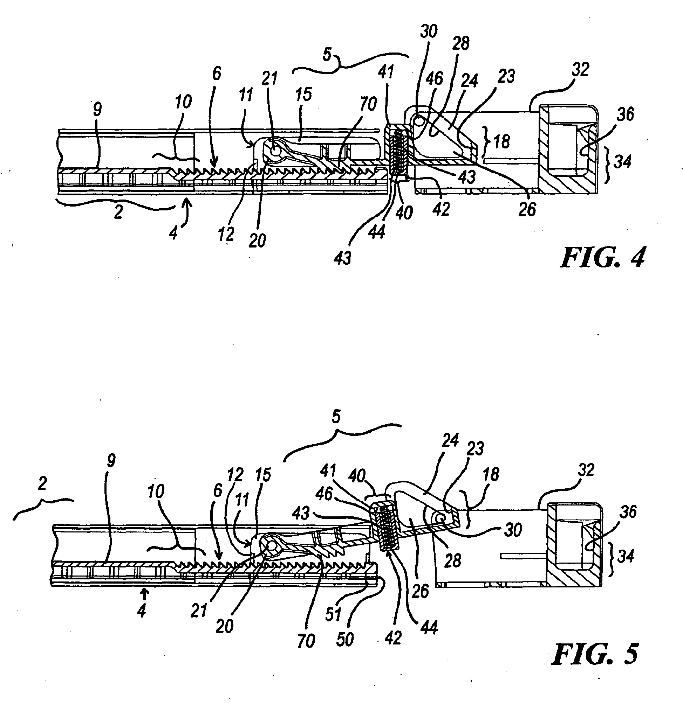

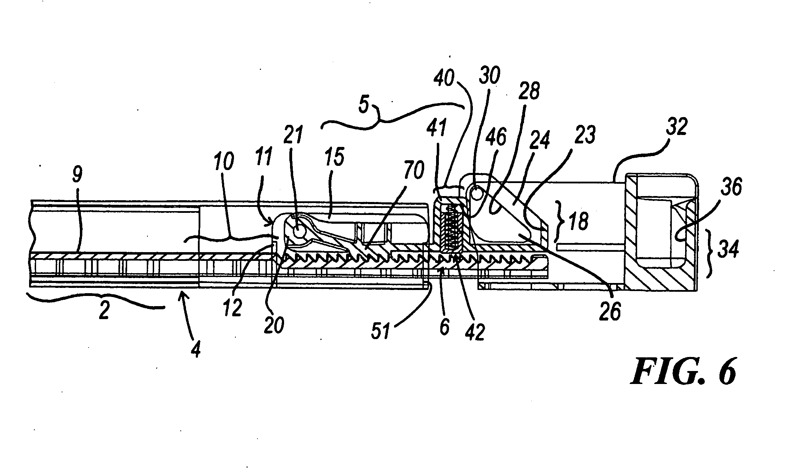

The lever 18 presents a stop element 40 made in one piece therewith. This stop element comprises a substantially cup-shaped body 41 in which a pin 42 is movable subjected to a spring 43 contained in a cavity of said pin and resting with one end on an end portion 44 of said pin and with a second end on a step 46 within the cup-shaped body 41. The pin 42 can assume two working positions: a first position, shown in Figure 4, in which it emerges from the cup-shaped body, and a position, shown in Figure 6, in which it is contained inside said body.

More particularly, the first working position of the pin 42 is attained when the second portion 4 of the base 2 is in a working position relative to the first portion 3 such that the base 2 is completely extended or elongated telescopically. In that case, the pin 42 rests against a free end 50 of the rack 6, at a free end 51 of the second portion 4 of the base 2. When in this position the extension of the base 2 cannot be reduced by sliding these portions 3, 4 relative to each other. This position of the pin 42 is assumed when the child seat is positioned on the sitting portion of the vehicle seat and the first portion 3 of the base 2 is engaged with the connection or fixing elements 10 integrated into the vehicle seat 100, as described hereinafter.

Following this engagement, the handle 34 is moved along the axis W of the base 2 to withdraw it from the portion 4 of this latter. This movement leads to cooperation between the pin 30 and the arcuate inclined side 28 of the hole 26 provided in each lateral portion 24, 25 of the lever 18. Said cooperation results in raising of the end 23 of said lever relative to the recess 38 about the pin which connects the end 19 of said lever to the flanges 14, 15 of the lever support 11.

This movement results in separation of the stop element 40 from the end 50 of the rack 6 and the raising of a toothed part 70 of the lever 18 from the rack 6 This allows relative sliding between the portion 4 rigid with the member 5, and the portion 3, this movement resulting inter alia in the superposing of the part 70 on a different (inner) part of the rack 6 (and hence of the element 40 on this latter). By virtue of the particular shape of the teeth of the part 70 and of the rack 6 (which enables them to side in mutual contact towards the back rest 102 of the vehicle seat 100), the portion 1 of the child seat can now be made to approach said back rest 102, the stop 40 being above the rack and hence not preventing this movement.

In other words, after the fixing elements 110 have been engaged, the handle 34 must be moved along the axis W so that the pin 42 is able to rise and separate from the end 50 of the rack. Then, holding the handle still pulled (and the lever 18 raised), the portion 1 is moved towards the car back rest: with the handle pulled, the pin 42 does not engage this end and becomes positioned above the rack. At this point the handle 34 can be released as the lever 18 slides along the rack (because of the shape of the teeth of this latter and of the lever part 70) and the portion 1 can be moved towards the back rest. The opposite movement is not possible because of the engagement between the portion 70 of the lever 18 and the rack.

Having thus attained the position in which this portion rests against said back rest, with the lever 18 engaged with the rack 6, relative movement between the member 5 and the rack 6 by its withdrawal from the back rest is blocked (as is therefore the movement between the portion 3 and the portion 3 in the same direction), to lock the portion 1 of the child seat in its attained utilization position.

An elastic return member can be associated with the handle 34 to return it to its rest position after the portion 3 of the base 2 has engaged the fixing elements 10 associated with the vehicle seat. It should be noted that because of the shape of the teeth of the part 70 and of the rack 6, the member 5 can move along this latter even if the lever 18 has returned to its rest position in which its end 23 is inserted in the cavity 38 of the handle 34. This facilitates installation of the child seat on the vehicle seat.

The portion 3 is engaged with the fixing elements 110 via engagement pieces 86 associated with each C-shaped free end 3A of the portion 3 (comprising two parallel arms 3K cooperating with arms 4K of the portion 4). Each end hence comprises a slot 87 to enable this end to be positioned on a corresponding fixing element 110.

In the interior of each said end 3A a known rotatable coupling member 86 is present, for example of inverted U-shape, rigid with a bar 89 and pivoted to pins (not shown) rigid with the end 3A and about which the coupling member 86 can rotate. The bar 89 rigid with each rotatable coupling member 86 is connected to a slider 90 slidable on a surface 91 of the portion 3 to control the engagement between the coupling member 86 and the corresponding element 110. The movement of this slider enables the coupling member 86 to rotate and engage or disengage the element 110 inserted in the slot 87 of the end 3A corresponding to the arm 3K of the portion 3.

To ensure coupling of the rotatable coupling member 86 to the corresponding fixing element 110 while at the same preventing telescopic sliding of the portion 4 relative to the portion 3 if this coupling is not correctly carried out, a member 93 for blocking this telescopic movement is provided within the arm 3K of the corresponding portion 3 (allowing movement only if the corresponding coupling member 86 is correctly coupled to the fixing element 110).

Specifically, each blocking member 93 is a pin presenting a first end 94 movable within a hole 95 provided in the arm 3K of the portion 3 and able to assume two positions, namely projecting from it (Figure 9) if the coupling member 86 is not coupled to the element 110 or totally within the hole (Figure 10) if said coupling member 86 is coupled to the element 110. The blocking member 93 presents a collar 96 on which there rests one end of a compression spring 97 interposed between said collar and an inner part 98 of an insert 118 fixed into the arm 3K close to the hole 95.

The member 93 is rigid with a part 115 movable within a seat 116 of the insert 118. This part 115 presents an end 119 at least partially with an inclined surface and arranged to cooperate with a correspondingly inclined end 120 (i.e. as a form fit with the end 99) of a part 121 operationally rigid with the bar 89 with which the coupling member 86 is associated. This part 121 slides within the corresponding arm 3K parallel to the axis W when the bar 89 moves.

Consequently, when the coupling member 86 is separated from the fixing element 110 (Figure 9), the bar 89 and the slider 90 are in a position withdrawn from the end 3A of the portion 3, and the part 121 pushes the member 93 towards the hole 95 (by cooperation between its end 120 and the part 115) from which the first end 94 of this member 93 projects. This prevents telescopic movement of the portions 3 and 4 and hence makes it impossible to consider that the child seat is correctly positioned and fixed on the vehicle seat 1.

In contrast, when the coupling member 86 is coupled to the fixing element 110, the part 121 moves towards the end 3A of the respective arm 3K of the portion 3 and the spring 97 moves the end 94 of the blocking member 93 into the arm 3K, to free the telescopic movement of the parts 3 and 4 of the child seat base 2. This enables correct positioning and locking of the child seat on the vehicle seat 100 to be achieved and recognized as such, and hence enables the position of the portion 1 thereon to be regulated.

Advantageously and preferably, the first end 94 of the blocking member 93 has a colour well visible on the corresponding arm 3K of the portion 3 (for example red) in order to be easily seen when projecting from the hole 95 of this arm to highlight the fact that the coupling member 86 and corresponding element 110 are not coupled together.

The invention hence enables the child seat to be fixed to the fixing elements 110 of the vehicle seat in a simple, reliable and readily detectable manner, so enabling a child to be safely transported.

A preferred embodiment of the invention has been described. Others are however possible within the light of the present description as long they remain within the scope of the accompanying claims.

## Claims

1. A child car seat of the type intended to cooperate with connection or fixing elements integrated into a vehicle seat having a sitting portion and a back rest, the child seat comprising a child support part (1) and a base (2) to rest on the vehicle seat, said base comprising two portions (3, 4) telescopically coupled together, a first portion (3) cooperating with the fixing elements of the vehicle seat by means of a coupling member (86) located at a free end (3A) of the first portion (3), said coupling member (86) being associated with a manual control element (90) to separate it from the fixing element (110) of the corresponding vehicle seat (100) when the child seat is to be removed from the car, the coupling member (86) cooperating with a member (93) for blocking relative telescopic movement of the two portions (3, 4) of the base (2), said blocking member (93) being operationally associated with the first portion (3) of the base (2) and projecting from it, to hence prevent said relative telescopic movement, when the coupling member (86) is separated from the fixing element (110) and retracting into said first portion (3) when said coupling member (86) is connected to the fixing element (110), to hence enable this movement and enable the child support part (1) to be brought into contact with the back rest (102) of the vehicle seat (100), the first portion (3) of the base (2) comprising two parallel arms (3K) slidable telescopically relative to corresponding arms (4K) of the second portion (4) of the base (2), corresponding coupling members (86) being associated with said arms (3K) of the first portion (3), the blocking member (93) for preventing movement of the arms (3K) of the first portion (3) relative to the arms (4K) of the second portion being rigid with at least one of said arms (3K), the second portion (4) of the base (2) is rigid with a member (5) selectively movable along a rack (6) fixed to the first portion (3) of the base (2), said member comprising means (70) for its coupling to the rack which are releasable from this latter in order to enable said portions (3, 4) of the base (2) to be moved relative to each other, said coupling means (70) being connectable to said rack after the position of the second portion (4) of the base (2) has been regulated relative to the first portion (3) in order to block relative movement between these latter, on termination of said regulation the child support portion (1) being in the optimum position for its use on the vehicle seat, the coupling means being a toothed part (70) of the movable member (5), said toothed part (70) being carried by an element (18) withdrawable from the rack (6), the shape of said toothed part enabling it to be coupled to the rack (6) when the first and second portion of the base (2) have been regulated, **characterized in that** the withdrawable element is a lever (18) having a part (19) pivoted (at 21) at a first end (20) to parallel flanges (14, 15) of a support (11) for the member (5) fixed to the second portion (4) of the base (2), said support being of U cross-section and comprises said parallel flanges (14, 15) joined to a base (16), said flanges (14, 15) and base (16) defining a compartment (17) containing the lever (18), in said compartment being located the rack (6), a second end (23) of said lever (18) cooperating with an actuator (34) for moving said lever relative to the rack (6).

2. A child seat as claimed in claim 1, **characterised in that** said actuator is an operating handle (34) movable along the longitudinal axis (W) of the child seat base (2), said handle presenting a gripping portion (36) from which parallel flanges (31, 32) project to support a pin (30) disposed transversely within a recess (38) containing the second end (23) of the lever (18), said second end presenting a profiled guide (28) to receive said pin (30), the movement of the handle along the axis (W) resulting in a movement of said pin within said guide (28) and the movement of said second end in a direction perpendicular to the rack (6), obtaining a rotation of the lever (18) about a pin (21) supported by the parallel flanges (14, 16) of the support (11) for the member (5).

3. A child seat as claimed in claim 2, **characterised in that** the movement of the operating handle (34) is guided along the base (2).

4. A child seat as claimed in claim 3, **characterised in that** the operating handle (34) presents lateral flanges (37) presenting slots (33) within which guide pins associated with the child support portion (1) slide.

5. A child seat as claimed in claim 1, **characterised in that** the lever (18) supports a stop element (40) for the movement of the member (5) along the rack (6) and hence of the second portion (4) of the base (2).

6. A child seat as claimed in claim 5, **characterised in that** the stop element (40) comprises an internally hollow cup element (41) housing a pin (42) movable against an elastic thrust member (43) contained in the cavity of said hollow cup element (41), said pin emerging from said cavity when the movable member (5) is in a position at the end of the rack (6) and becoming inserted into said cavity when said movable member (5) is positioned on the rack (6).

7. A child seat as claimed in claim 1, **characterised in that** the rack (6) forms at least part of a bar (10) fixed to a transverse part (7) of the first portion (3) of the base (2).

8. A child seat as claimed in claim 1, **characterised in that** the rack (6) is positioned along the longitudinal axis (W) of the base (2).

9. A child seat as claimed in claim 1, **characterised in that** said blocking member is a pin (93) inserted into the first portion (3) of the child seat and movable within a hole (95) provided in said portion, said pin (93) cooperating with an operating part (121) inside said portion (3) and operationally connected to the coupling member (86) of this latter, the pin (93) presenting a first end (94) which moves relative to the hole (95) of said first portion (3) on the basis of whether the coupling member (86) is in the position in which it is coupled or not coupled to the corresponding fixing element (110), the pin (93) being rigid with a part (115) which cooperates with said operating part (121) to move the pin.

10. A child seat as claimed in claim 9, **characterised in that** the pin (93) cooperates with elastic means (97) tending to make it assume a working position relative to the hole (95) of the first portion of the child seat, in which the pin (93) projects from the hole (95), said elastic means (97) being a compression spring.

11. A child seat as claimed in claim 9, **characterised in that** the part (115) with which the pin (93) is rigid moves with the pin, against the elastic means, within a seat (116) of an insert (118) fixed in the first portion (3) of the base (2) of the child seat.

12. A child seat as claimed in claim 9, **characterised in that** the part (115) with which the pin (93) is rigid presents an at least partially wedge-shaped end (119) which cooperates, as a form fit, with an end (120) of a part (121) movable within and along the portion (3) of the base child seat (2) and operationally rigid with the coupling member (86).

13. A child seat as claimed in claim 12, **characterised in that** the coupling member (86) is rigid with a bar (89) slidable within the first portion (3) of the child seat base (2) and connected to the part (121) cooperating with the blocking member (93).

14. A child seat as claimed in claim 13, **characterised in that** the bar (89) with which the coupling member (86) is rigid is connected to the manual control element (90) for this latter.

15. A child seat as claimed in claim 1, **characterised in that** the coupling member (86) is an inverted U-shaped element rotating about a pin rigid with the first portion (3) of the child seat base (2) such that it becomes coupled to or released from the fixing element (110) rigid with the vehicle seat (100).

16. A child seat as claimed in claim 1, **characterised in that that** part (94) of the blocking member (93) which is able to project from the first portion (3) of the child seat base (2) is coloured with a colour which stands out on the portion (3) when it projects from this latter, in order to highlight the fact that the coupling member (86) is in the position in which it is separated from the fixing element (110) of the vehicle seat (100).

## Patentansprüche

1. Auto-Kindersitz von dem Typus, der mit Verbindungs- oder Befestigungselementen, die in einem Fahrzeugsitz mit einem Sitzabschnitt und einer Rückenlehne integriert sind, zusammenwirken soll, wobei der Kindersitz ein Kinderstützteil (1) und eine Basis (2) zum Aufliegen auf dem Fahrzeugsitz umfasst, wobei die Basis zwei teleskopisch zusammen gekoppelte Abschnitte (3, 4) umfasst, wobei ein erster Abschnitt (3) mit den Befestigungselementen des Fahrzeugsitzes mittels eines Kopplungsteils (86), welches sich an einem freien Ende (3A) des ersten Abschnitts (3) befindet, zusammenwirkt, wobei das Kopplungsteil (86) mit einem manuellen Steuerelement (90) assoziiert ist, um es von dem Befestigungselement (110) des entsprechenden Fahrzeugsitzes (100) zu trennen, wenn der Kindersitz aus dem Auto entfernt werden soll, wobei das Kopplungsteil (86) mit einem Teil (93) zum Blockieren von teleskopischer Relativbewegung der zwei Abschnitte (3, 4) der Basis (2) zusammenwirkt, wobei das Blockierteil (93) funktionsfähig mit dem ersten Abschnitt (3) der Basis (2) assoziiert ist und sich von ihm aus erstreckt, um derart die teleskopische Relativbewegung zu verhindern, wenn das Kopplungsteil (86) von dem Befestigungselement (110) getrennt ist, und es in den ersten Abschnitt (3) zurückzuziehen, wenn das Kopplungsteil (86) mit dem Befestigungselement (110) verbunden ist, um derart diese Bewegung zu ermöglichen und es zu ermöglichen, dass das Kinderstützteil (1) in Kontakt mit der Rückenlehne (102) des Fahrzeugsitzes (100) gebracht wird, wobei der erste Abschnitt (3) der Basis (2) zwei parallele Arme (3K) umfasst, welche relativ zu korrespondierenden Armen (4K) des zweiten Abschnitts (4) der Basis (2) teleskopisch verschiebbar sind, korrespondierende Kopplungsteile (86), welche mit den Armen (3K) des ersten Abschnitts (3) assoziiert sind, wobei das Blockierteil (93) zum Verhindern von Bewegung der Arme (3K) des ersten Abschnitts (3) relativ zu den Armen (4K) des zweiten Abschnitts unnachgiebig gegenüber mindestens einem der Arme (3K) ist, wobei der zweite Abschnitt (4) der Basis (2) unnachgiebig gegenüber einem selektiv entlang einer an dem ersten Abschnitt (3) der Basis (2) befestigten Schienenhalterung (6) bewegbaren Teil (5) ist, wobei das Teil Mittel (70) für seine Kopplung an der Schienenhalterung umfasst, die lösbar von der Letztgenannten sind, um es den Abschnitten (3, 4) der Basis (2) zu ermöglichen, relativ in Bezug zueinander bewegt zu werden, wobei die Kopplungsmittel (70) mit der Schienenhalterung verbunden werden können, nachdem die Position des zweiten Abschnitts (4) der Basis (2) relativ in Bezug auf die erste Position (3) reguliert worden ist, um relative Bewegung zwischen den zwei Letztgenannten zu blockieren, wobei nach Beendigung dieser Regulierung der Kinderstützabschnitt (1) in der optimalen Position für seine Benutzung auf dem Fahrzeugsitz ist, wobei die Kopplungsmittel ein gezahntes Stück (70) des bewegbaren Teils (5) sind, wobei das gezahnte Stück (70) mittels eines Elements (18), welches von der Schienenhalterung (6) zurückziehbar ist, getragen wird, wobei es die Form des gezahnten Stücks ermöglicht, dass es an die Schienenhalterung (6) gekoppelt wird, nachdem der erste und zweite Abschnitt der Basis (2) reguliert wurden, **dadurch gekennzeichnet, dass** das zurückziehbare Element ein Hebel (18) mit einem Stück (19) ist, welches an einem ersten Ende (20) drehbar (bei 21) gegenüber parallelen Backen (14, 15) einer Befestigung (11) für das an dem zweiten Abschnitt (4) der Basis (2) befestigte Teil (5) ist, wobei die Befestigung einen U-förmigen Querschnitt hat und parallele Backen (14, 15) umfasst, die an eine Basis (16) angeschlossen sind, wobei die Backen (14, 15) und die Basis (16) eine den Hebel (18) beinhaltende Kammer (17) definieren, wobei sich in der Kammer die Schienenhalterung (6) befindet, wobei ein zweites Ende (23) des Hebels (18) mit einem Betätiger (34) zum Bewegen des Hebels relativ zu der Schienenhalterung (6) zusammenwirkt.

2. Kindersitz wie in Anspruch 1 beansprucht, **dadurch gekennzeichnet, dass** der Betätiger ein Bediengriff (34) ist, welcher entlang der Längsachse (W) der Kindersitzbasis (2) bewegbar ist, wobei der Griff einen Greifabschnitt (36) bildet, von welchem sich parallele Backen (31, 32) erstrecken, um einen Stift (30) zu stützen, welcher quer innerhalb einer Aussparung (38) angeordnet ist, welche das zweite Ende (23) des Hebels (18) beinhaltet, wobei das zweite Ende eine profilierte Führung (28) bildet, um den Stift (30) aufzunehmen, wobei die Bewegung des Griffs entlang der Achse (W) in einer Bewegung des Stifts innerhalb der Führung (28) und in der Bewegung des zweiten Endes in einer Richtung senkrecht zu der Schienenhalterung (6) resultiert, wodurch eine Rotation des Hebels (18) um einen Stift (21), welcher durch die parallelen Backen (14, 16) der Stütze (11) für das Teil (5) gestützt wird, erhalten wird.

3. Kindersitz wie in Anspruch 2 beansprucht, **dadurch gekennzeichnet, dass** die Bewegung des Bediengriffs (34) entlang der Basis (2) geführt wird.

4. Kindersitz wie in Anspruch 3 beansprucht, **dadurch gekennzeichnet, dass** der Bediengriff (34) Längsbacken (37) bildet, welche Schlitze (33) bilden, innerhalb welcher mit dem Kinderstützabschnitt (1) assoziierte Führungsstifte verschieben.

5. Kindersitz wie in Anspruch 1 beansprucht, **dadurch gekennzeichnet, dass** der Hebel (18) ein Anschlagelement (40) für die Bewegung des Teils (5) entlang der Schienenhalterung (6) und somit von dem zweiten Abschnitt (4) der Basis (2) stützt.

6. Kindersitz wie in Anspruch 5 beansprucht, **dadurch gekennzeichnet, dass** das Anschlagelement (40) ein innen hohles Becherelement (41) umfasst, welches einen Stift (42) beherbergt, welcher gegenüber einem elastischen Federspannungsteil (43) bewegbar ist, welches in dem Hohlraum des hohlen Becherelements (41) beinhaltet ist, wobei der Stift aus dem Hohlraum austritt, wenn das bewegliche Teil (5) in einer Position an dem Ende der Schienenhalterung (6) ist und in den Hohlraum eingebracht wird, wenn das bewegliche Teil (5) auf der Schienenhalterung (6) positioniert ist.

7. Kindersitz wie in Anspruch 1 beansprucht, **dadurch gekennzeichnet, dass** die Schienenhalterung (6) mindestens einen Teil einer Leiste (10) ausbildet, welche an einem Querteil (7) des ersten Abschnitts (3) der Basis (2) befestigt ist.

8. Kindersitz wie in Anspruch 1 beansprucht, **dadurch gekennzeichnet, dass** die Schienenhalterung 6 entlang der Längsachse (W) der Basis (2) positioniert ist.

9. Kindersitz wie in Anspruch 1 beansprucht, **dadurch gekennzeichnet, dass** das Blockierteil ein Stift (93) ist, welcher in den ersten Abschnitt (3) des Kindersitzes eingebracht ist und beweglich innerhalb eines Lochs (95) ist, welches in dem Abschnitt bereitgestellt ist, wobei der Stift (93) mit einem Bedienstück (121) innerhalb des Abschnittes (3) zusammenwirkt und funktionsfähig mit dem Kopplungsteil (86) des Letztgenannten verbunden ist, wobei der Stift (93) ein erstes Ende (94) bildet, welches sich basierend darauf, ob das Kopplungsteil (86) in der Position ist, in welcher es mit dem korrespondierenden Befestigungselement (110) gekoppelt ist oder nicht gekoppelt ist, relativ zu dem Loch (95) des ersten Abschnitts (3) bewegt, wobei der Stift (93) unnachgiebig gegenüber einem Stück (115) ist, welches mit dem Bedienstück (121) zusammenwirkt, um den Stift zu bewegen.

10. Kindersitz wie in Anspruch 9 beansprucht, **dadurch gekennzeichnet, dass** der Stift (93) mit einem elastischen Mittel (97) zusammenwirkt, welches darauf gerichtet ist, dass er eine Arbeitsposition relativ zu dem Loch (95) des ersten Abschnitts des Kindersitzes annimmt, in welcher der Stift (93) sich aus dem Loch (95) hinaus erstreckt, wobei das elastische Mittel (97) eine Kompressionsfeder ist.

11. Kindersitz wie in Anspruch 9 beansprucht, **dadurch gekennzeichnet, dass** das Stück (115), gegenüber welchem der Stift (93) unnachgiebig ist, sich mit dem Stift gegenüber dem elastischen Mittel innerhalb eines Sitzes (116) eines Einsatzes (118), welcher in dem ersten Abschnitt (3) der Basis (2) des Kindersitzes befestigt ist, bewegt.

12. Kindersitz wie in Anspruch 9 beansprucht, **dadurch gekennzeichnet, dass** das Stück (115), gegenüber welchem der Stift (93) unnachgiebig ist, ein zumindest teilweise keilförmiges Ende (119) bildet, welches als Formschluss mit einem Ende (120) eines Stücks (121), welches innerhalb und entlang des Abschnittes (3) des Basiskindersitzes (2) bewegbar ist und funktionsfähig unnachgiebig gegenüber dem Kopplungsteil (86) ist, zusammenwirkt.

13. Kindersitz wie in Anspruch 12 beansprucht, **dadurch gekennzeichnet, dass** das Kopplungsteil (86) gegenüber einer Leiste (89) unnachgiebig ist, welche innerhalb des ersten Abschnittes (3) der Kindersitzbasis (2) verschiebbar ist und mit dem Stück (121) verbunden ist, welches mit dem Blockierteil (93) zusammenwirkt.

14. Kindersitz wie in Anspruch 13 beansprucht, **dadurch gekennzeichnet, dass** die Leiste (89), gegenüber der das Kopplungsteil (86) unnachgiebig ist, mit dem manuellen Steuerelement (90) für das Letztgenannte verbunden ist.

15. Kindersitz wie in Anspruch 1 beansprucht, **dadurch gekennzeichnet, dass** das Kopplungsteil (86) ein invertiertes U-förmiges Element ist, welches um einen Stift rotiert, der gegenüber dem ersten Abschnitt (3) der Kindersitzbasis (2) unnachgiebig ist, so dass es von dem Befestigungselement (110), welches gegenüber dem Fahrzeugsitz (100) unnachgiebig ist, gekoppelt oder freigesetzt wird.

16. Kindersitz wie in Anspruch 1 beansprucht, **dadurch gekennzeichnet, dass** das Stück (94) des Blockierteils (93), welches sich von dem ersten Abschnitt (3) der Kindersitzbasis (2) erstrecken kann, mit einer Farbe koloriert ist, welche auf dem Abschnitt (3) hervorsticht, wenn es sich von dem Letztgenannten erstreckt, um die Tatsache zu betonen, dass das Kopplungsteil (86) in der Position ist, in welcher es getrennt von dem Befestigungselement (110) des Fahrzeugsitzes (100) ist.

## Revendications

1. Siège-auto pour enfant du type destiné à coopérer avec des éléments de raccordement ou de fixation intégrés dans un siège de véhicule ayant une portion d'assise et une portion de dossier, le siège-auto comprenant une partie de support d'enfant (1) et une base (2) destinée à reposer sur le siège de véhicule, ladite base comprenant deux portions (3, 4) couplées de manière télescopique l'une à l'autre, une première portion (3) coopérant avec les éléments de fixation du siège de véhicule au moyen d'un élément de couplage (86) situé à une extrémité libre (3A) de la première portion (3), ledit élément de couplage (86) étant associé à un élément de commande manuel (90) pour le séparer de l'élément de fixation (110) du siège de véhicule (100) correspondant lorsque le siège-auto doit être retiré de la voiture, l'élément de couplage (86) coopérant avec un élément (93) destiné à bloquer un mouvement télescopique relatif des deux portions (3, 4) de la base (2), ledit élément de blocage étant associé de manière fonctionnelle à la première portion (3) de la base (2) et faisant saillie depuis celle-ci, afin d'empêcher ainsi ledit mouvement télescopique relatif, lorsque l'élément de couplage (86) est séparé de l'élément de fixation (110) et rétracté dans ladite première portion (3) quand ledit élément de couplage (86) est raccordé à l'élément de fixation (110), afin de permettre ainsi ce mouvement et de permettre de mettre la partie de support d'enfant (1) en contact avec le dossier (102) du siège de véhicule (100), la première portion (3) de la base (2) comprenant deux bras parallèles (3K) pouvant coulisser de manière télescopique par rapport à des bras (4K) correspondants de la deuxième portion (4) de la base (2), des éléments de couplage (86) correspondants étant associés auxdits bras (3K) de la première portion (3), l'élément de blocage (93) destiné à empêcher un mouvement des bras (3K) de la première portion (3) par rapport aux bras (4K) de la deuxième portion étant rigide par rapport à au moins l'un desdits bras (3K), la deuxième portion (4) de la base (2) est rigide par rapport à un élément (5) pouvant se déplacer de manière sélective le long d'un rail (6) fixé à la première portion (3) de la base (2), ledit élément comprenant un moyen (70) permettant son couplage au rail qui est amovible par rapport à ce dernier afin de permettre auxdites portions (3, 4) de la base (2) de se déplacer l'une par rapport à l'autre, ledit moyen de couplage (70) pouvant être raccordé audit rail après que la position de la deuxième portion (4) de la base (2) a été réglée par rapport à la première portion (3) pour bloquer un mouvement relatif entre ces dernières, lorsque ledit réglage est terminé, la portion de support d'enfant (1) étant dans la position optimale pour son utilisation sur le siège de véhicule, le moyen de couplage étant une partie dentée (70) de l'élément mobile (5), ladite partie dentée (70) étant supportée par un élément (18) pouvant être éclipsé du rail (6), la forme de ladite partie dentée (70) permettant de la coupler au rail (6) lorsque les première et deuxième portions de la base (2) ont été réglées, **caractérisé en ce que** l'élément éclipsable est un levier (18) ayant une partie (19) pivotée (en 21) à une première extrémité (20) par rapport à des rebords parallèles (14, 15) d'un support (11) de l'élément mobile (5) fixé sur la deuxième portion (4) de la base (2), ledit support ayant une section transversale en U et comprenant lesdits rebords parallèles (14, 15) assemblés à une base (16), lesdits rebords (14, 15) et ladite base (16) définissant un compartiment (17) contenant le levier (18), ledit compartiment contenant le rail (6), une deuxième extrémité (23) dudit levier (18) coopérant avec un actionneur (34) pour déplacer ledit levier par rapport au rail (6).

2. Siège-auto selon la revendication 1, **caractérisé en ce que** ledit actionneur est un levier de commande (34) pouvant être déplacé le long d'un axe longitudinal (W) de la base (2) du siège-auto, ledit levier de commande présentant une portion de préhension (36) depuis laquelle des rebords parallèles (31, 32) font saillie pour supporter une broche (30) disposée transversalement dans un évidement (38) contenant la deuxième extrémité (23) du levier (18), ladite deuxième extrémité présentant un guide profilé (28) pour recevoir ladite broche (30), le mouvement du levier de commande le long de l'axe (W) résultant en un mouvement de ladite broche dans ledit guide (28) et un mouvement de ladite deuxième extrémité dans une direction perpendiculaire au rail (6), ce qui permet d'obtenir une rotation du levier (18) autour d'une broche (21) supportée par les rebords parallèles (14, 15) du support (11) de l'élément mobile (5).

3. Siège-auto selon la revendication 2, **caractérisé en ce que** le mouvement du levier de commande (34) est guidé le long de la base (2).

4. Siège-auto selon la revendication 3, **caractérisé en ce que** le levier de commande (34) présente des rebords latéraux (37) munis de fentes (33) dans lesquelles des broches de guidage associées à la portion de support d'enfant (1) coulissent.

5. Siège-auto selon la revendication 1, **caractérisé en ce que** le levier (18) supporte un élément d'arrêt (40) pour le mouvement de l'élément (5) le long du rail (6) et donc de la deuxième portion (4) de la base (2).

6. Siège-auto selon la revendication 5, **caractérisé en ce que** l'élément d'arrêt (40) comprend un élément en forme de godet d'intérieur creux (41) contenant une broche (42) pouvant se déplacer contre un élément de poussée élastique (43) logé dans la cavité dudit élément en forme de godet creux (41), ladite broche émergeant de ladite cavité lorsque l'élément mobile (5) est dans une position à l'extrémité du rail (6) et devenant insérée dans ladite cavité lorsque l'élément mobile (5) est positionné sur le rail (6).

7. Siège-auto selon la revendication 1, **caractérisé en ce que** le rail (6) forme au moins une partie d'une barre (10) fixée sur une partie transversale (7) de la première portion (3) de la base (2).

8. Siège-auto selon la revendication 1, **caractérisé en ce que** le rail (6) est positionné le long de l'axe longitudinal (W) de la base (2).

9. Siège-auto selon la revendication 1, **caractérisé en ce que** ledit élément de blocage est une broche (93) insérée dans la première portion (3) du siège-auto et pouvant se déplacer dans un trou (95) prévu dans ladite portion, ladite broche (93) coopérant avec une partie de commande (121) à l'intérieur de ladite portion (3) et raccordée de manière fonctionnelle à l'élément de couplage (86) de celle-ci, la broche (93) présentant une première extrémité (94) qui se déplace par rapport au trou (95) de ladite première portion (3) selon que l'élément de couplage (86) est dans la position dans laquelle il est couplé ou non couplé à l'élément de fixation (110) correspondant, la broche (93) étant rigide par rapport à une partie (115) qui coopère avec ladite partie de commande (121) pour déplacer la broche.

10. Siège-auto selon la revendication 9, **caractérisé en ce que** la broche (93) coopère avec un moyen élastique (97) tendant à l'obliger à prendre une position de travail par rapport au trou (95) de la première portion du siège-auto, dans lequel la broche (93) fait saillie depuis le trou (95), ledit moyen élastique (97) étant un ressort de compression.

11. Siège-auto selon la revendication 9, **caractérisé en ce que** la partie (115) par rapport à laquelle la broche (93) est rigide se déplace avec la broche, contre le moyen élastique, dans un logement (116) d'un insert (118) fixé dans la première portion (3) de la base (2) du siège-auto.

12. Siège-auto selon la revendication 9, **caractérisé en ce que** la partie (115) par rapport à laquelle la broche (93) est rigide présente une extrémité au moins en partie en forme de coin (119) qui coopère, en adéquation de forme, avec une extrémité (120) d'une partie (121) mobile dans et le long de la portion (3) de la base (2) du siège-auto et rigide de manière fonctionnelle par rapport à l'élément de couplage (86).

13. Siège-auto selon la revendication 12, **caractérisé en ce que** l'élément de couplage (86) est rigide par rapport à une barre (89) pouvant coulisser dans la première portion (3) de la base (2) du siège-auto et raccordée à la partie (121) coopérant avec l'élément de blocage (93).

14. Siège-auto selon la revendication 13, **caractérisé en ce que** la barre (89) par rapport à laquelle l'élément de couplage (86) est rigide est raccordée à l'élément de commande manuel (90) de ce dernier.

15. Siège-auto selon la revendication 1, **caractérisé en ce que** l'élément de couplage (86) est un élément en U inversé tournant autour d'une broche rigide par rapport à la première portion (3) de la base (2) du siège-auto de sorte qu'il s'accouple à ou se sépare de l'élément de fixation (110) rigide par rapport au siège de véhicule ( 100).

16. Siège-auto selon la revendication 1, **caractérisé en ce que** la partie (94) de l'élément de blocage (93) qui peut faire saillie depuis la première portion (3) de la base (2) du siège-auto est colorée d'une couleur qui attire l'attention sur la portion (3) quand elle fait saillie depuis cette dernière, afin de mettre en évidence le fait que l'élément de couplage (86) est dans la position dans laquelle il est séparé de l'élément de fixation (110) du siège de véhicule (100).
